# EUROPEAN PATENT APPLICATION

(11) **EP 4 372 329 A1**
(43) Date of publication of application: **22.05.2024**
(21) Application number: 22842403.2
(22) Date of filing: 11.07.2022
(51) Int. Cl.: G01F 23/292, G01N 21/35, G06T 7/12, G06T 7/50

(54) **METHOD AND SYSTEM FOR DETERMINING HEIGHT OF SOLUTION ACCOMMODATED IN CONTAINER**

(30) Priority: 12.07.2021 KR 20210090676
(71) Applicant: Seegene, Inc., Seoul 05548 (KR)
(72) Inventor: HAN, Yoo Jun, Hanam-si Gyeonggi-do 12912 (KR); CHO, Deog Pill, Seoul 08018 (KR); JEONG, Won Seok, Seoul 08719 (KR); LIM, Hyun Jin, Seoul 06927 (KR)
(74) Representative: Viering, Jentschura & Partner mbB Patent- und Rechtsanwälte
(86) International application number: PCT/KR2022/010065
(87) International publication number: WO 2023/287141

(57) **Abstract**

The present disclosure provides a method and a system for determining the height of a solution in a container in order to amplify and detect a target nucleic acid, the method comprising the steps of: using an illuminator to emit infrared light at the container, which is a colored container; using a detector comprising a photosensor, so as to sense the infrared light passing through the container and refracted, the detector being arranged in the direction of sensing the refracted infrared light; using the sensed refracted infrared light so as to acquire an image; and analyzing the acquired image so as to determine the height of the solution in the container.

## Description

### [TECHNICAL FIELD]

The present disclosure relates to a method and system for determining the height of a solution in a container in a non-destructive manner by emitting infrared light to the container, in which the solution is accommodated, sensing infrared light passing through the container, and analyzing an image.

### [BACKGROUND ART]

Recently, vision inspection has been necessarily performed in various factory automation facilities with the advancement of image processing technology and the development of hardware platforms for image processing. Such vision inspection is implemented by an illuminator that emits light, a camera that photographs an inspection object, and an inspector that inspects an image obtained by the camera, and is performed in the manner of inspecting a defect state of a product by analyzing an obtained image when an image is obtained by performing photographing with light supplied to an inspection object that has undergone a manufacturing process.

Such a vision inspection system is used to sense a defect or the configuration of an object by emitting light to the object and photographing the object.

Light that is emitted to an object reacts with various substances in various ways.

Some substances easily transmit light, other substances block or absorb light, and the amount of light that is passed or blocked depends on the thickness of substances.

Accordingly, vision inspection systems of the related art can sense a defect or the configuration of an object by selectively emitting light of a specific wavelength that reflects from or passes through the object and sensing the intensity of light reflecting from the object, or can check an image showing the inside of the object by sensing a specific wavelength using a filter, which filters out the specific wavelength, on the basis of the properties of light passing through the object.

Such vision inspection systems are used also in the method of detecting the components inside an object that are not visually seen when inspecting various objects. For example, in order to detect the components inside an object, light of a wavelength that is reflected by or absorbed in the object cannot be used and light of a specific wavelength that can pass through an object is used and sensed, so light should be limited to light that makes it possible to see through an object. The specific wavelength is a wavelength that should be filtered out from a plurality of wavelengths, and for this purpose, a filter that can selectively filter out only the wavelength should be prepared.

Meanwhile, the components inside an object may also contain various elements and some of these elements may sensitively react to light and the properties may change when light is applied, so it is required to block external light noises such as the sunlight or incandescent electric lamps.

Accordingly, vision inspection systems require an inspection method that enables stable measurement in correspondence to the properties of objects when detecting whether there are components included in specific objects or the level of components.

### [DETAILED DESCRIPTION OF INVENTION]

### [TECHNICAL PROBLEMS]

The inventors have made efforts to develop a technology that can determine the height of a solution in a container in a non-destructive manner while not influencing the elements of the solution in a vision inspection system.

As a result, the inventors determined that it is possible to show whether a solution is accommodated in a container and the height of the solution in the container through an image by accommodating a solution in a colored container that reflects visible light, emitting infrared light, which can pass through the container, to the container, and sensing the infrared light passing through the container.

Under this background, the present disclosure provides a method and system for determining the height of a solution accommodated in a container by emitting infrared light to a colored container, detecting the infrared light refracted from the colored container by reacting thereto using a detector, and identifying a horizontal edge in a sensed image.

### [TECHNICAL SOLUTION]

The present disclosure relates to a method and system for determining the height of a solution accommodated in a container.

In one embodiment, a method for determining the height of a solution in a container for amplifying and detecting a target nucleic acid, comprises: emitting infrared light to the container using an illuminator, wherein the container is a colored container; sensing the infrared light passing through and refracted by the container using a detector including an optical sensor, wherein the detector is disposed in an orientation such that the detector senses the refracted infrared light; obtaining an image using the refracted infrared light sensed; and determining the height of the solution in the container by analyzing the image obtained.

In one embodiment, the infrared light that is emitted to the container includes infrared light wavelengths selected from a wavelength range of 730 nm to 980 nm.

In one embodiment, the analyzing of the obtained image includes: identifying a horizontal edge from the obtained image; and determining the height of the solution on the basis of the identified horizontal edge.

In one embodiment, the solution additionally includes a solute.

In one embodiment, the solute is a dye.

In one embodiment, the dye is a fluorescent, luminescent, and chromogenic dye.

In one embodiment, the solute is an oligonucleotide.

In one embodiment, the solute is an oligonucleotide bonded with a dye.

In one embodiment, the detector is a monochrome detector.

In one embodiment, the container has higher transmittance for the infrared light than visible light.

In one embodiment, a system for determining the height of a solution in a container for amplifying and detecting a target nucleic acid, comprises: an illuminator for emitting infrared light to the container; a detector for obtaining an image by sensing the infrared light passing through and refracted by the container using the illuminator, wherein the detector is disposed in an orientation such that the detector senses the refracted infrared light; and a controller for determining the height of the solution in the container by analyzing the image obtained by the detector.

In one embodiment, the controller identifies a horizontal edge from the obtained image and determines the height of the solution on the basis of the identified horizontal edge.

In one embodiment, the detector is a monochrome detector.

### [EFFECT OF INVENTION]

The method and system for determining the height of a solution in a container according to an embodiment of the present disclosure can determine the height of a solution in a container in a non-destructive manner without influencing the solution in the container by accommodating a solution in a colored container, emitting infrared light, and obtaining an image using a detector that is disposed in a region in which it can sense light that is refracted from the container.

### [BRIEF DESCRIPTION OF THE DRAWING]

FIG. 1 is a flowchart for describing a method for determining the height of a solution in a container according to the present disclosure.
FIG. 2 is a configuration diagram of a system for implementing the method for determining the height of a solution in a container according to the present disclosure.
FIG. 3 is an exemplary diagram showing an image and an edge detection image obtained to determine the height of a solution in a container according to the present disclosure.

### [BRIEF DESCRIPTION OF THE DRAWING]

Hereafter, the present disclosure will be described in more detail through embodiments. Such embodiments are provided only to describe the present disclosure in more detail and it would be apparent to those skilled in the art that the scope of the present disclosure is not limited by those embodiments in accordance with the spirit of the present disclosure.

Further, terms "first", "second", "A", "B", "(a)", and "(b)" can be used in the following description of the components of the present disclosure. These terms are provided only for discriminating components from other components and the essence, sequence, or order of the components is not limited by the terms. When a component is described as being "connected", "combined", or "coupled" with another component, it should be understood that the component may be directly connected or coupled to another component, but another component may be "connected", "combined", or "coupled" between components.

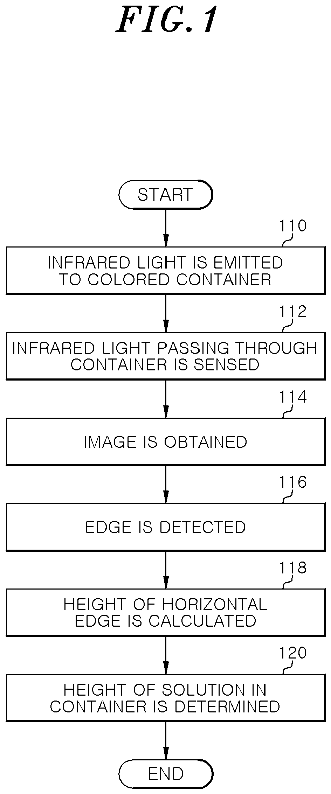

Determining the height of a solution in a container according to the present disclosure is to determine the height of a solution in a container to check whether the portioned state of the solution in the container is normal or abnormal on the basis of a preset height by emitting infrared light to a colored container in which an oligonucleotide solution is accommodated, sensing the infrared light passing through the container using a monochrome camera, and performing image analysis. FIG. 1 is a flowchart for describing a method for determining the height of a solution in a container according to the present disclosure.

Referring to FIG. 1, in step 110, according to an embodiment of an object accommodating a solution for amplifying and detecting a target nucleic acid using an illuminator, infrared light is emitted to a colored container.

In the operation of the illuminator emitting infrared (IR) light in step 110, infrared light is turned on while light of other wavelengths is turned off by a control signal from a controller, whereby infrared light may be emitted to the colored container at a predetermined time or at predetermined time intervals. Alternatively, when the illuminator is an illuminator that emits exclusively infrared light, infrared light may be emitted to the colored container at a predetermined time or at predetermined time intervals on the basis of a control signal from a controller.

The solution for amplifying and detecting a target nucleic acid that is accommodated in the colored container may additionally include a solute.

According to an embodiment, the solute may be a dye. The solute is an oligonucleotide bonded with the dye. The dye may be a fluorescent, luminescent, and chromogenic dye. For example, the dye may be a fluorescent dye selected from a group of Cy2^{™}, YO-PRO^{™}-1, YOYO^{™}-1, Calcein, FITC, FluorX^{™}, Alexa^{™}, Rhodamine 110, Oregon Green^{™} 500, Oregon Green^{™} 488, RiboGreen^{™}, Rhodamine Green^{™}, Rhodamine 123, Magnesium Green^{™}, Calcium Green^{™}, TO-PRO^{™}-1, TOTO1, JOE, BODIPY530/550, Dil, BODIPY TMR, BODIPY558/568, BODIPY564/570, Cy3^{™}, Alexa^{™} 546, TRITC, Magnesium Orange^{™}, Phycoerythrin R&B, Rhodamine Phalloidin, Calcium Orange^{™} Pyronin Y, Rhodamine B, TAMRA, Rhodamine Red^{™}, Cy3.5^{™}, ROX, Calcium Crimson^{™}, Alexa^{™}594, Texas Red, Nile Red, YO-PRO^{™}-3, YOYO^{™}-3, R-phycocyanin, C-Phycocyanin, TO-PRO^{™}-3, TOTO3, DiD DilC(5), Cy5^{™}, Thiadicarbocyanine, Cy5.5, HEX, TET, Biosearch Blue, CAL Fluor Gold 540, CAL Fluor Orange 560, CAL Fluor Red 590, CAL Fluor Red 610, CAL Fluor Red 635, FAM, Fluorescein, Fluorescein-C3, Pulsar 650, Quasar 570, Quasar 670, and Quasar 705. In particular, the fluorescent dye may be a fluorescent dye selected from a group of FAM, CAL Fluor Red 610, HEX, Quasar 670, and Quasar 705.

The oligonucleotide according to the present disclosure is the sequence of an oligonucleotide particularly designed to amplify and/or detect a target nucleic acid sequence.

The oligonucleotide sequence is a primer sequence or a probe sequence.

Such an 'oligonucleotide' means a linear oligomer of natural or modified monomers or linkages, includes a deoxyribonucleotide and a ribonucleotide, can be specifically hybridized to a target nucleic acid sequence, and naturally exists or is artificially synthesized. The oligonucleotide is particularly a single chain for maximum efficiency in hybridization. In detail, the oligonucleotide is an oligodeoxyribonucleotide. The oligonucleotide of the present disclosure may include naturally occurring dNMPs (i.e., dAMP, dGMP, dCMP, and dTMP), nucleotide analogs or derivatives. Further, oligonucleotides may also include ribonucleotides. For example, the oligonucleotide of the present disclosure may include a backbone-modified nucleotide, for example, Peptide Nucleic Acid (PNA) (M Egholm et al., Nature, 365:566-568 (1993)), (Locked Nucleic Acid (LNA) (WO1999/014226), Bridged Nucleic Acid (BNA) (WO2005/021570), phsophorothioate DNA, phsophorodithioate DNA, phosphoroamidate DNA, amide-linked DNA, MMI-linked DNA, 2'-0-methyl RNA, alpha-DNA and methylphosphonate DNA, sugar-modified nucleotides such as 2'-0-methyl RNA , 2'-fluoro RNA, 2'-amino RNA, 2'-O-alkyl DNA, 2'-O-allyl DNA, 2'-O-alkynyl DNA, hexose DNA, pyranosyl RNA and anhydrohexitol DNA, and nucleotides with base modifications such as C-5 substituted pyrimidines (substituents include fluoro-, bromo-, chloro-, iodo-, methyl-, ethyl-, vinyl-, formyl-, ethytil-, propynyl-, alkynyl-, thiazolyl-, imidazoryl-, and pyridyl-), 7-deazapurine with C-7 substituents (substituents are fluoro-, bromo-, chloro-, iodo-, methyl-, ethyl-, vinyl-, formyl-, alkynyl-, alkenyl-, thiazolyl-, imidazoryl-, pyridyl-), inosine and diaminopurine. In particular, the term 'oligonucleotide' used herein is a single-stranded deoxyribonucleotide.

In step 110, it is preferable that the colored container is disposed in a region in which the inside and outside of the colored container can be irradiated with uniform light intensity by the illuminator.

According to an embodiment, the colored container according to the present disclosure is a tube and the tube may have a certain appropriate shape or type. For example, the tube means a container having a predetermined internal accommodation space and having a body, a closed bottom, and an open top. A solution can be put in and taken out through the open top, a solution can be accommodated in the tube body through the body and the closed bottom from the open top, and a cap configured to be attached to cover the open top may be used together with the tube.

The cap may be a type connected to the tube or a type separated from the tube. The tube includes tubes made of various materials (e.g., a high-molecular compound such as plastic, synthetic resin, and rubber, or glass) and having various shapes and sizes.

In general, in apparatuses that induce a reaction using liquid such as a nucleic acid sample testing device, tubes can accommodate or house liquids such as a reagent or a specimen. For example, tubes can accommodate reagents and/or samples, for example, nucleic acid samples to be used in amplification assays.

The tube has been described as an example of the colored container according to the present disclosure, but the present disclosure is not limited thereto and it is apparent that the colored container may be freely replaced by containers having different shapes from the tube as long as they can accommodate a solution and do not interfere with image analysis and emission, absorption, transmission, reflection, and refraction of light.

The colored container according to the present disclosure is a container having higher transmittance for infrared light than visible light. The colored container is a container that is not transparent and is colored, and, according to an embodiment, is a container having a color that blocks visible light and transmits infrared light.

The term "transmissive" means a light ability of specific wavelength range that passes through a material/surface while not dispersing light or without minimum dispersion of light. Accordingly, a slight loss of light due to dispersion of light can generate a transflective substance/surface that is a subset of the transmissive substance/surface according to the present disclosure.

In this specification, the term "transmission" may be used in relation to light in specific wavelength ranges, for example, visible light, infrared light, ultraviolet light, etc. According to an embodiment, the term "transmission" may be used in relation to infrared light, but it would be apparent that the present disclosure is not limited thereto. It is apparent that light in any range of wavelength can be used as long as it can pass through the colored container while visible light is blocked.

Accordingly, the colored container according to the present disclosure, which is a container having a color making it difficult to identify the substance in the container, may be, particularly, a brownish container, preferably, an amber tube, but the present disclosure is not limited thereto.

According to an embodiment, an oligonucleotide is accommodated in such an amber tube, and, as described above, the oligonucleotide is the sequence of an oligonucleotide particularly designed to amplify and/or detect a target nucleic acid sequence. In general, kits for amplifying and/or detecting a target nucleic acid are on the market and those skilled in the art can amplify and/or detect a target nucleic acid from various samples using kits on the market.

The colored container according to the present disclosure may be included in and provided together with such kits.

A kit may selectively include a reagent required to perform target amplification PCR reaction (e.g., PCR reaction) such as a DNA polymerase cofactor and a deoxyribonucleotide-5-triphosphate. Selectively, the kit of the present disclosure may also include various polynucleotide molecules, reverse transcriptases, various buffers and reagents, and antibodies suppressing activation of DNA polymerases.

Further, the kit of the present disclosure may include a necessary reagent for performing positive control group and negative control group reactions. The optimal amount of reagents that are used in specific reactions can be easily determined by those skilled in the art who learned the matters disclosed in the present specification. Typically, the kit of the present disclosure is manufactured as a separate package or compartment including the components described above.

As described above, according to kits, various reagents are accommodated in respective containers to be supplied. When the reagent in a container is a reagent that sensitively reacts to light, the properties of the reagent may change when light is applied, depending on the components of the reagent, so it is required to block external light noises such as the sunlight or incandescent light. Accordingly, various reagents should be selectively accommodated in a container that can reflect and/or transmit and/or absorb light in specific wavelength ranges to provide kits.

Since the solute included in the solution for amplifying and/or detecting a target nucleic acid according to the present disclosure is a dye, it is sensitive to visible light. Accordingly, in order to block visible light that directly travels into an oligonucleotide that is the solute, the oligonucleotide is accommodated in a colored container in the present disclosure.

Since the colored container according to the present disclosure has a color (according to an embodiment, a brownish color), light in a specific wavelength range can be reflected, transmitted, and absorbed. For example, since colored containers have a high reflectivity of visible light due to the colors, such colored containers serve to prevent visible light from passing through the inside of the colored containers and discharge visible light to the outside by reflecting visible light coming from the outside. On the other hand, infrared light corresponding to a longer wavelength than visible light is light that can pass through colored containers.

In general, the brighter (white) the color of infrared light, the more it is reflected, and the darker (black) the color of infrared light, the more it is not reflected (absorbed). Due to these properties, when infrared light is emitted to the colored container according to the present disclosure, the infrared light can permeate into the colored container unlike visible light that is reflected.

This is because the infrared light with a wavelength next to the red of visible light has deeper red and is close to a brownish color, so infrared light of colors similar to a brownish colored container is much absorbed into the colored container and transmitted than the amount reflecting at the outside of the colored container due to the properties of light.

Such infrared light includes a specific wavelength region. The wavelength range of infrared light that is emitted to the colored container in accordance with the present disclosure may include infrared light wavelengths selected from the wavelength region of the range of 730 nm to 980 nm. For example, the wavelength may be 700, 710, 720, 730, 740, 750 nm or more, and may be 1000, 990, 980, 970, 960, 950, 940, 930, 920, 910, 900 nm or less. According to an embodiment, the illuminator according to the present disclosure can emit infrared light in a wavelength region of 900 nm. According to an embodiment of the present disclosure, the range of the wavelength region of infrared light may be selected within a wavelength range designated by a user or may be set in advance by a controller.

In step 112, light passing through a container is sensed from infrared light emitted to the container using a detector including an optical sensor.

The infrared light that is sensed in step 112 is refractive light of the infrared light traveling into and passing through a colored container. That is, when the infrared light emitted to the colored container passing through the inside of the colored container comes out of the colored container, the traveling direction bends into a specific direction, whereby the infrared light is refracted.

In general, light is refracted when traveling across different media (e.g., the surface of a colored container and a solution accommodated in the colored container). That is, the infrared light according to the present disclosure comes out of the illuminator, is transmitted into the colored container, and is then refracted without maintaining the incident direction due to the solution accommodated in the colored container.

Accordingly, in step 112, in order to sense infrared light that is refracted from the colored container, it is preferable that the detector is disposed in the refraction direction of the infrared light passing through the colored container.

This is because it is required to sense infrared light that is refracted by variation of a refractive index that changes the traveling direction of the infrared light at the interface between two media that the infrared light passes through, for example, the surface of the colored container and the solution.

In step 114, an image is obtained using the sensed light. The optical sensor of the detector according to the present disclosure converts an optical signal of an object (e.g., colored container), in which light traveling through an optical lens, into an electrical signal. It is possible to create an image on the basis of converted electrical signals.

The image in this case is an image of the colored container through which infrared light passed and makes it possible to check even the inside of the colored container accommodating the solution.

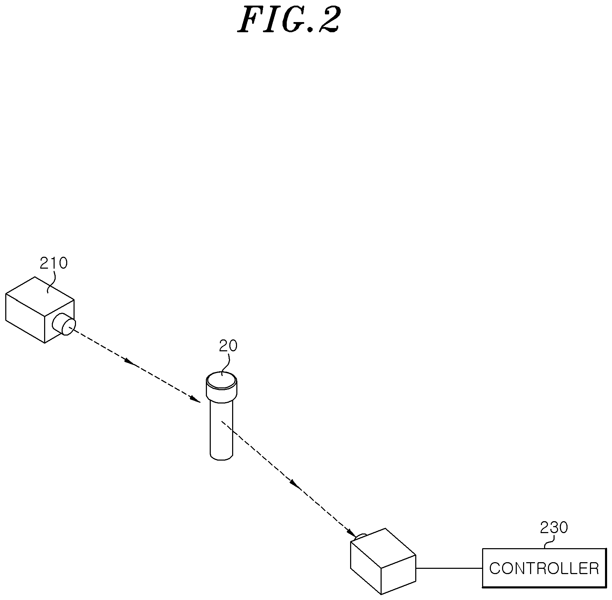

As described above, infrared light is more reflected as the color thereof is brighter, and infrared light is less reflected as the color thereof is darker, and substantially, when infrared light travels to a colored container, most of the light travels into the container but some of the light reflects, which can be discriminated by light and darkness. When this is sensed through a CCD or CMOS detector and an image is created, as shown in FIG. 2, an image showing the inside of the colored container can be obtained.

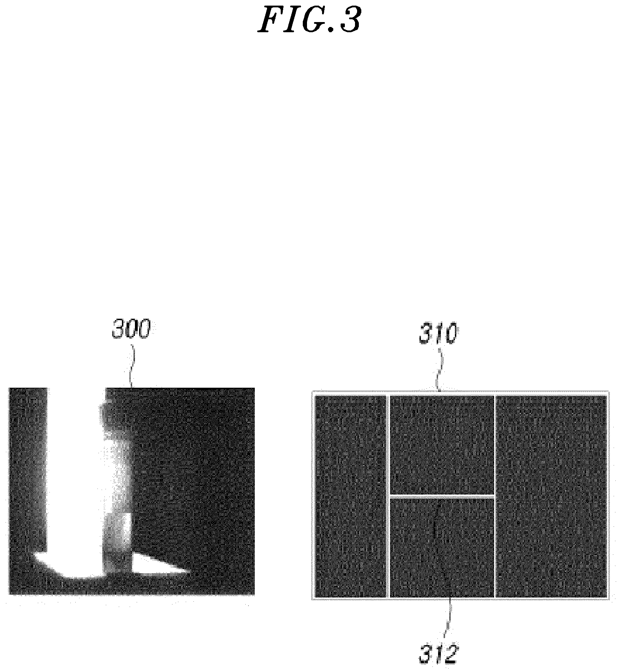

FIG. 3 shows an image obtained by infrared light passing through a colored container in determination of the height of a solution accommodated in the container according to the present disclosure.

An image 300 of the colored container through which infrared light has passed in accordance with the present disclosure is shown on the left side of FIG. 3. The detector according to the present disclosure is a monochrome detector. According to an embodiment, the monochrome detector is a monochrome (black and white) camera. The monochrome camera performs sensing in monochrome, for example, gray for sensed infrared light without filtering.

Accordingly, as shown in FIG. 3, the image 300 of the colored container through which infrared light has passed is a monochrome image and the light reflected through the colored container is sensed, so it is possible to check the inside of the container.

The image obtained in step 114 may be analyzed as follows through steps 116 to 118.

A horizontal edge 312 is identified from the obtained image, as shown on the right side of FIG. 3, and the height of the solution is determined by the identified horizontal edge. In this case, the horizontal edge is the level of the solution in the colored container.

An edge image 310 is created by detecting the edge from the image obtained in step 116.

In step 118, the height of the horizontal edge is calculated from the created edge image 310.

As the result of calculation, the height of the horizontal edge in the created edge image is determined on the basis of a preset height of horizontal edge.

The edge image 310 shown in FIG. 3 shows a body region with an edge detected in the colored container.

Even though an image of a colored container is obtained for the entire of the container including an open top, a body, and a closed bottom in accordance with an embodiment, it may be possible to detect only an edge in the body region of the colored container when detecting an edge.

This is because a solution is accommodated substantially in the body region of the colored container to determine the height of the solution accommodated in the container in accordance with the present disclosure.

Calculating the height of a horizontal edge in the created edge image 310 is performed by outputting the created edge image 310 in a preset screen and comparing the horizontal edge of the preset screen and the horizontal edge 312 in the created edge image 310, or comparing the horizontal edge 312 with an absolute height standardized into a specific height, or comparing the height of the horizontal edge 312 in the created edge image 310 and the height of the horizontal edge in a registered edge image.

Identifying a horizontal edge in accordance with the present disclosure is performed in accordance with an edge detection algorithm well known in the computer vision field of detecting an edge from an image.

FIG. 2 is a diagram showing the configuration of a system 200 for implementing the method for determining the height of a solution in a container according to the present disclosure.

The system 200 according to the present disclosure has a configuration in which an illuminator 210 is disposed at 45° ± 10° with respect to a colored container 200 in FIG. 2, but, in spite of the embodiment, the present disclosure is not limited thereto and there is no specific limitation as long as it is possible to irradiate generally the entire surface of the colored container 20. Further, for example, a plurality of illuminators 210 may be disposed symmetrically on the left and right at an angle of 10°, 20°, 30°, 40°, 50°, 60°, 70°, 80°, 90°, 100°, 110°, 120°, 130°, 140°, 150°, 160°, 170°, 180° or more, or 180°, 170°, 160°, 150°, 140°, 130°, 120°, 110°, 100°, 90°, 80°, 70°, 60°, 50°, 40°, 30°, 20°, 10° or less with respect to the colored container 20 or may be disposed on the left and/or on the right and/or on only any one side with respect to the colored container 20.

It is apparent that the position of the detector 220 can be freely changed as long as the detector 220 can sense light that is refracted from the colored container 20 and can obtain a clear image using the sensed light at the position. Accordingly, as the detector 220, similar to the illuminator 210, one or a plurality of detectors also may exist and may be disposed on the left and/or on the right and/or on only any one side around the colored container 20.

Referring to FIG. 2, the system 200 according to the present disclosure includes an illuminator 210, a detector 220, and a controller 230.

The illuminator 210 emits infrared light. Although the illuminator 210 is disposed at a side of the colored container 20 in FIG. 2, it is only an embodiment, the present disclosure is not limited thereto, and one or a plurality of illuminators 210 may be selectively disposed as long as it is possible to irradiate the entire of the colored container 20.

The detector 220 obtains an image by sensing infrared light passing through the colored container 20 irradiated with the infrared light by the illuminator 210.

The detector 220 is disposed in the refraction direction of the infrared light passing through the container 20. This is because it is required to sense infrared light that is refracted by variation of a refractive index that changes the traveling direction of the infrared light at the interface between two media that the infrared light passes through, for example, the surface of the colored container and the solution.

The infrared light according to the present disclosure includes a specific wavelength region. The wavelength range of infrared light that is emitted to the colored container 20 may include infrared light wavelengths selected from the wavelength region of the range of 730nm to 980nm. For example, the wavelength may be 700, 710, 720, 730, 740, 750 nm or more, and may be 1000, 990, 980, 970, 960, 950, 940, 930, 920, 910, 900 nm or less. According to an embodiment, the illuminator 210 according to the present disclosure can emit infrared light in a wavelength region of 900 nm. According to an embodiment, the wavelength range of infrared light may be selected within a wavelength range designated by a user or may be set in advance by the controller 230.

The controller 23 determines the height of the solution accommodated in the container by analyzing the image obtained from the detector 220.

The detector 220 is a monochrome detector. According to an embodiment, the monochrome detector is a monochrome camera. The monochrome camera performs sensing in monochrome, for example, gray, for sensed infrared light without filtering.

The controller 230 according to the present disclosure identifies a horizontal edge from the obtained image and determines the height of the solution on the basis of the identified horizontal edge.

Calculating the height of a horizontal edge in the created edge image 310 is performed by outputting the created edge image 310 in a preset screen and comparing the horizontal edge of the preset screen and the horizontal edge 312 in the created edge image 310, or comparing the horizontal edge 312 with an absolute height standardized into a specific height, or comparing the height of the horizontal edge 312 in the created edge image 310 and the height of the horizontal edge in a registered edge image.

According to an embodiment, the system 200 according to the present disclosure may include an automatic vision inspection system.

An automatic vision inspection system includes a container, a conveyer on which the container is conveyed, an illuminator, and a detector and includes an image obtaining apparatus for vision inspection that obtains an image for vision inspection and a computer that performs inspection determination by analyzing image data received from the image obtaining apparatus for vision inspection and performs storage management (database) of image information for vision inspection and storage management of vision inspection result information. In this case, the inspection determination relates to determining the height of a solution accommodated in a container and is to determine whether it is normal or abnormal on the basis of a preset height. To this end, the image obtained from the image obtaining apparatus for vision inspection is output on a preset screen with a horizontal edge displayed, and the horizontal edge of the preset screen and the horizontal edge in the obtained image are compared, or the horizontal edge is compared with an absolute height standardized into a specific height, or the height of the horizontal edge in the obtained image and the height of the horizontal edge in a registered edge image are compared.

Further, the terms "comprise", "include", "have", etc. described above mean that the components can exist inside unless specifically stated otherwise, so they should be construed as being able to further include other components rather than excluding other components. Unless otherwise defined, all terms including technical and scientific terms used herein have the same meaning as commonly understood by those skilled in the art to which the present disclosure belongs. It will be further understood that terms commonly used, such as those defined in dictionaries, should be interpreted as having a meaning that is consistent with their meaning in the context of the relevant art and the present disclosure, and will not be interpreted in an idealized or overly formal sense unless expressly so defined herein.

The above description merely explains the idea of the present disclosure and the present disclosure may be changed and modified in various ways without departing from the scope of the present disclosure by those skilled in the art. Accordingly, the embodiments described herein are provided not to limit, but to merely explain the idea of the present disclosure, and the idea of the present disclosure is not limited by the embodiments. The scope of the present disclosure should be construed by the following claims, and all technical ideas within the equivalent scope should be construed as being included in the scope of the present disclosure.

Specific embodiments of the present disclosure have been described in detail above, but it is apparent that the detailed description only corresponds to preferred embodiments to those skilled in the art and the scope of the present disclosure is not limited thereto. Accordingly, the substantial scope of the present disclosure is considered as being defined by the claims and equivalents thereof.

### CROSS-REFERENCE TO RELATED APPLICATION

The present application claims priority to Korean Patent Application No. 10-2021-0090676, filed on July 12, 2021 in Korea, under Article 119(a) of Patent Laws of United States (35 U.S.C §119(a)) and the entire contents of which are incorporated herein for all purposes by this reference. In addition, this non-provisional application claims priorities in countries, other than the U.S., with the same reason based on the Korean Patent Application, the entire contents of which are hereby incorporated by reference.

## Claims

1. A method for determining the height of a solution in a container for amplifying and detecting a target nucleic acid, the method comprising:
emitting infrared light to the container using an illuminator, wherein the container is a colored container;
sensing the infrared light passing through and refracted by the container using a detector including an optical sensor, wherein the detector is disposed in an orientation such that the detector senses the refracted infrared light;
obtaining an image using the refracted infrared light sensed; and
determining the height of the solution in the container by analyzing the image obtained.

2. The method of claim 1, wherein the infrared light that is emitted to the container includes infrared light wavelengths selected from a wavelength range of 730 nm to 980 nm.

3. The method of claim 1, wherein the analyzing of the obtained image includes:
identifying a horizontal edge from the obtained image; and
determining the height of the solution on the basis of the identified horizontal edge.

4. The method of claim 1, wherein the solution additionally includes a solute.

5. The method of claim 4, wherein the solute is a dye.

6. The method of claim 5, wherein the dye is a fluorescent, luminescent, and chromogenic dye.

7. The method of claim 4, wherein the solute is an oligonucleotide.

8. The method of claim 4, wherein the solute is an oligonucleotide bonded with a dye.

9. The method of claim 1, wherein the detector is a monochrome detector.

10. The method of claim 1, wherein the container has higher transmittance for the infrared light than visible light.

11. A system for determining the height of a solution in a container for amplifying and detecting a target nucleic acid, the system comprising:
an illuminator for emitting infrared light to the container;
a detector for obtaining an image by sensing the infrared light passing through and refracted by the container using the illuminator, wherein the detector is disposed in an orientation such that the detector senses the refracted infrared light; and
a controller for determining the height of the solution in the container by analyzing the image obtained by the detector.

12. The system of claim 11, wherein the controller identifies a horizontal edge from the obtained image and determines the height of the solution on the basis of the identified horizontal edge.

13. The system of claim 11, wherein the detector is a monochrome detector.
